# EUROPÄISCHE PATENTSCHRIFT

(11) **EP 1 989 454 B1**
(45) Veröffentlichungstag und Bekanntmachung des Hinweises auf die Patenterteilung: **09.04.2014**
(21) Anmeldenummer: 07711512.9
(22) Anmeldetag: 08.02.2007
(51) Int. Cl.: F16C 13/02

(54) **WALZE**
ROLLER
CYLINDRE

(30) Priorität: 22.02.2006 DE 102006008282
(43) Veröffentlichungstag der Anmeldung: 12.11.2008
(73) Patentinhaber: Windmöller & Hölscher KG, 49525 Lengerich (DE)
(72) Erfinder: ELSLER, Marinus, 49324 Melle (DE); BRÜGGEMANN, Marc, 49545 Tecklenburg (DE)
(74) Vertreter: Schneider, Bernd
(86) Internationale Anmeldenummer: PCT/EP2007/001204
(87) Internationale Veröffentlichungsnummer: WO 2007/096073

(56) Entgegenhaltungen:
- DE-A1- 4 414 317
- DE-A1- 19 927 897
- DE-U1- 8 622 336

## Beschreibung

Die vorliegende Erfindung betrifft eine Walze mit wenigstens einer Walzenachse und wenigstens einem relativ zu der Walzenachse mittels wenigstens zweier Lager drehbaren Walzenkörper.

Bei Traversenwalzen, die eine gestellfeste, also nicht drehbare Walzenachse aufweisen und auf der mittels Lager zumindest ein Walzenkörper drehbar gelagert ist, besteht das Problem, dass sich die drehfeste Walzenachse aufgrund der Schwerkraft durchbiegt. Diese Problematik ergibt sich insbesondere bei Traversenwalzen mit zwei getrennten Walzenkörpern. Diese Durchbiegung hat zur Folge, dass die Lager der Walzenkörper nicht mehr fluchten, was eine Schwergängigkeit der Lager sowie einen erhöhten Verschleiß zur Konsequenz hat. Darüber hinaus besteht das Problem, dass die Walzenkörper aufgrund der Biegung der Walzenachse nicht parallel zueinander angeordnet sind, sondern leicht zueinander geneigt sind.

Um die Durchbiegung der Walzenachse zu kompensieren, wurde versucht, die Walzenachse nach außen über das Gestell hinaus zu verlängern und dort mit Gewichten zu versehen, um eine die Biegung verhindernde oder verringernde Gegenkraft aufzubringen. Ebenso wurde versucht, die drehfeste Walzenachse mittig zu unterstützen, um die Durchbiegung zu verhindern.

Die genannten Maßnahmen sind insofern nachteilig, als dass sie einerseits vergleichsweise aufwendig sind und zum anderen einen großen Platzbedarf beanspruchen.

Die DE 199 27 897 A1 offenbart eine Walze, deren Biegelinie ebenfalls einstellbar ist. Die Walze umfasst dabei ein äußeres Walzenrohr und eine innere Stützwalze. Die Biegelinie kann verändert werden, indem die innere Stützwalze durch eine Verschiebung ihres Radiallagers gegen die Innenwand des äußeren Walzenrohres angestellt wird. Das Lager ist mit einer Verstellschraube fixierbar. Die Offenbarung der DE 199 27 897 offenbart damit die Merkmale des Oberbegriffs des Anspruchs 1. Demnach zeigt sie, dass sich wenigstens eines der Lager auf einer Buchse abstützt, die relativ zu der Walzenachse derart bewegbar angeordnet ist, dass die Ausrichtung der Drehachse des sich auf der Buchse abstützenden Lagers relativ zur Walzenachse veränderbar ist.

Es ist die Aufgabe der vorliegenden Erfindung, bei einer Walze der eingangs genannten Art die Schwergängigkeit und den Verschleiß der Lager zu minimieren.

Diese Aufgabe wird durch eine Walze mit den Merkmalen des Anspruchs 1 gelöst. Danach ist vorgesehen, dass die zu der Buchse gewandte Seite des Rings eine konvexe oder konkave Wölbung aufweisen und die zu dem Ring gewandte Seite der Buchse eine vorzugsweise komplementäre Wölbung, d h. eine konkave oder konvexe Wölbung aufweisen kann. Auf diese Weise lässt sich eine einfache Verschiebung der Buchse relativ zu dem Ring erreichen, was eine entsprechend veränderte Ausrichtung der Drehachse des mit der Buchse in Verbindung stehenden Lagers zur Folge hat.

Außerdem lässt sich auf diese Weise erreichen, dass die Drehachsen der Lager der Walzenkörper vergleichsweise einfach miteinander fluchtend ausgerichtet werden können.

Aufgrund der Tatsache, dass sich wenigstens eines der Lager nicht auf der Walzenachse, sondern auf der Buchse abstützt, die ihrerseits relativ zu der Walzenachse bewegbar angeordnet ist, lässt sich erreichen, dass diese Buchse und damit auch das sich auf dieser abstützende Lager relativ zur Walzenachse bewegbar ist, wodurch eine Ausrichtung der entsprechenden Lagerdrehachse möglich ist.

In weiterer Ausgestaltung der Erfindung ist vorgesehen, dass die Buchse einen ersten Bereich aufweist, auf dem sich das Lager abstützt und einen zweiten Bereich aufweist, mittels derer die Buchse mittelbar oder unmittelbar mit der Walzenachse verbindbar ist.

Dabei kann vorgesehen sein, dass der erste Bereich einen mit Abstand zur Walzenachse angeordneten Ring umfasst, auf dessen Außenumfang sich das Lager abstützt. Aufgrund der Beweglichkeit der Buchse relativ zur Walzenachse, ist auch die Achse des Ringes und somit die Drehachse des mit diesem in Verbindung stehenden Lagers relativ zu der Walzenachse in ihrer Ausrichtung veränderbar.

Bei dem zweiten Bereich kann es sich um einen flanschförmigen Abschnitt handeln, der vorzugsweise zur Befestigung der Buchse an der Achse bzw. an einem mit der Achse in Verbindung stehenden Bauteil dient.

Der erste Bereich der Buchse und der zweite Bereich der Buchse können aufeinander senkrecht stehen. Je nach Anordnung der Buchse relativ zur Walzenachse kann der Ring in etwa parallel zur Walzenachse oder in einem spitzen Winkel zu dieser angeordnet sein, während der flanschförmige Abschnitt im wesentlichen senkrecht auf der Walzenachse steht oder im spitzen Winkel zur Senkrechten geneigt ist.

In besonders bevorzugter Ausgestaltung der Erfindung ist vorgesehen, dass auf der Walzenachse ein Ring angeordnet ist, an dem die Buchse lösbar befestigt ist. Der Ring kann lösbar oder unlösbar mit der Walzenachse verbunden sein. Im betriebsbereiten Zustand der Anordnung ist der Ring vorzugsweise drehfest mit der Walzenachse verbunden.

Die einander zugewandten Seiten der Buchse und/oder des Ringes können eine glatte Oberfläche aufweisen oder eine mehrere Rasterungen bildende

Stufe aufweisen. Bei einer glatten Oberfläche ist die Zahl der möglichen Positionierungen der Buchse relativ zu dem Ring unbegrenzt, wohingegen bei einer Rasterung eine bestimmte Anzahl von Vorzugsstellungen einstellbar ist.

Die Verbindung zwischen Buchse und ring kann mittels Kraftschluss oder auch mittels Formschluss erfolgen.

Besonders vorteilhaft ist es, wenn die Verbindung zwischen Buchse und Ring mittels wenigstens einer Schraubverbindung erfolgt, mittels derer die Buchse und der Ring aneinander gepresst werden.

Besonders vorteilhaft ist es, wenn die Befestigung des Rings an der Buchse mittels wenigstens einer Schraubverbindung erfolgt, wobei die Buchse einen Gewindeabschnitt, vorzugsweise eine Innengewindebohrung aufweist, mit dem ein Abschnitt des Schraubengewindes verbindbar ist bzw. in Verbindung steht, und wobei der Ring eine Ausnehmung oder Bohrung aufweist, deren Innenabmessungen die Außenabmessungen des Schraubenschaftes übersteigen, so dass die Schraube in der Ausnehmung oder Bohrung in unterschiedliche Positionen bewegbar ist, d. h. in der Ausnehmung Spiel hat. Bei einem derartigen Ausführungsbeispiel der Erfindung wird zur korrekten Ausnchtung des Lagers die Schraube soweit gelöst, dass die Buchse relativ zu dem Ring verschiebbar bzw. bewegbar ist. Nach Erreichen der gewünschten Position bzw des gewünschten Lagerspieles wird die Schraube wieder festgezogen, woraufhin Buchse und Ring relativ zueinander fixiert werden. Grundsätzlich kann die Schraubverbindung mittels einer oder mehrerer Schrauben realisiert werden Vorzugsweise sind mehrere über den Umfang des Rings verteilte Schrauben vorgesehen.

Bei den Lagern kann es sich um Kugellager, vorzugsweise um Rillenkugellager handeln.

In weiterer Ausgestaltung der Erfindung ist vorgesehen, dass auf der Walzenachse zwei oder mehr als zwei Walzenkorper angeordnet sind, von denen die beiden außen liegenden auf ihrer Außenseite jeweils ein Lager aufweisen, das gemäß der vorliegenden Erfindung verstellbar ausgeführt ist

In weiterer Ausgestaltung der Erfindung ist vorgesehen, dass auf der Walzenachse zwei oder mehr als zwei Walzenkorpern angeordnet sind, von denen die beiden außen liegenden Walzenkörper auf ihrer Innenseite sowie etwaige dazwischen befindlichen Walzenkörper Lager aufweisen, deren Ausrichtung der Drehachse relativ zu der Walzenachse nicht veränderbar ist.

Denkbar ist somit ein Ausführungsbeispiel, bei dem die Walze zwei Walzenkörper aufweist, die auf ihrer jeweiligen Außenseite mit erfindungsgemäß verstellbaren Lagern und auf den zueinander gewandten Innenseiten mit nicht verstellbaren Lagern ausgeführt sind.

Die Walzenachse ist vorzugsweise drehfest angeordnet.

Die vorliegende Erfindung betrifft ferner eine Druckmaschine mit wenigstens einer Walze nach einem der Ansprüche 1 bis 14.

Die Erfindung betrifft ferner die Verwendung einer Walze gemäß der vorliegenden Erfindung zur Führung von Materialbahnen. Traversenwalzen gemäß der vorliegenden Erfindung mit zwei oder mehr als zwei Walzenkörpern werden vorzugsweise verwendet, wenn zwei oder mehrere Nutzen parallel verarbeitet werden sollen.

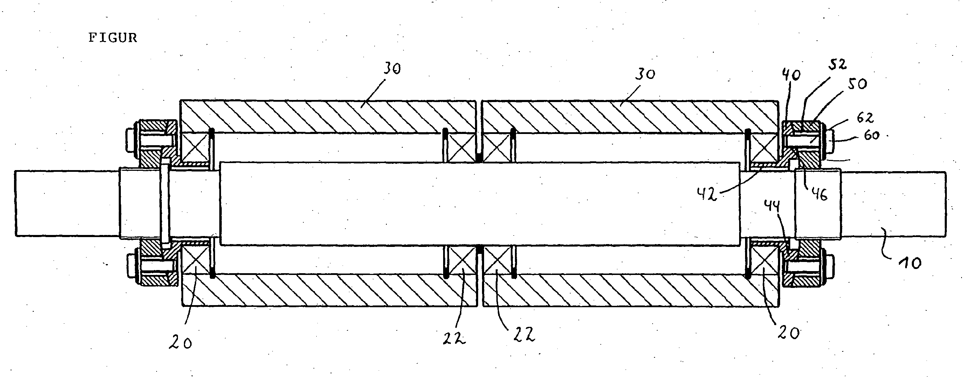

Weitere Einzelheiten und Vorteile der Erfindung werden anhand eines in der Figur dargestellten Ausführungsbeispiels näher erläutert.

Die einzige Figur zeigt eine Schnittdarstellung einer erfindungsgemäßen Traversenwalze mit zwei Walzenkörpern.

Wie dies aus der Figur hervorgeht, weist die Walze eine Walzenachse 10 auf, auf der mittels der Lager 20, 22 zwei Walzenkörper 30 drehbar angeordnet sind. Die Walzenachse 10 ist gestellfest angeordnet.

Die Lager 22, die sich im Bereich der zueinander gewandten Innenseiten der Walzenkörper 30 befinden, sind nicht verstellbar- ausgeführt. Diese Lager 22 stehen einerseits mit der Oberfläche der Walzenachse 10 und andererseits mit der Innenseite der Walzenkörper 30 in Verbindung, wie dies in der Figur dargestellt ist.

Jeder der Walzenkörper 30 ist in seinem nach außen gewandten Bereich ferner mittels zweier Lager 20 drehbar relativ zu der Walzenachse 10 gelagert. Anders als die Lager 22 stutzen sich die Lager 20 nicht unmittelbar auf der Walzenachse 10 ab, sondern auf dem ringförmigen Bereich 42 einer Buchse 40 Die Buchse 40 sitzt nicht auf der Achse 10 auf, sondern ist mit Abstand zu dieser angeordnet, wie dies aus der Figur hervorgeht Die Buchse 40 weist einen zweiten Bereich in Form eines flanschförmigen Abschnittes 44 auf, der zur Befestigung und Fixierung der Buchse 40 an dem ebenfalls dargestellten Ring 50 dient.

Der Ring 50 ist fest auf der Walzenachse 10 angeordnet

In dem Ring 50 befinden sich zwei oder mehr als zwei Durchgangsbohrungen 52, durch die sich Schrauben 60 erstrecken Wie dies aus der Figur hervorgeht, ist der Innendurchmesser der Durchgangsbohrungen 52 großer als der Außendurchmesser des Schaftes 62 der Schraube 60, so dass die Schraube 60 mit Spiel in der Bohrung 52 aufgenommen ist

In ihrem Endbereich ist die Schraube 60 mit ihrem Außengewinde in einer Innengewindebohrung 46 der Buchse 40 aufgenommen

Wird die Schraube 60 angezogen, fuhrt dies dazu, dass die Buchse 40 mit ihrer an den Ring 50 angrenzenden Fläche an den Ring 50 gepresst ist. In diesem Zustand ist die Buchse 40 relativ zu dem Ring 50 nicht bewegbar.

Zur Lagereinstellung wird die Schraube 60 soweit gelöst, dass die Buchse 40 relativ zu dem Ring 50 verschiebbar ist, so dass die konvexe Außenfläche der Buchse 40 an anderer Position der konkaven Innenfläche des Rings 50 als vor dem Verstellvorgang zu liegen kommt. Ist die gewünschte Lagerposition erreicht, wird die Schraube 60 festgezogen und die Buchse 40 in der dann eingestellten Position am Ring 50 fixiert Dadurch ergibt sich eine entsprechend veränderte Ausrichtung der Drehachse des Lagers 20, das auf diese Weise fluchtend zu dem nicht verstellbaren Lager 22 angeordnet werden kann.

Wie dargestellt ergibt sich eine besonders einfache Einstellbarkeit der Buchsen und damit des Lagers 20, wenn die Buchse 40 ein sphänsches Profil und der Ring 50 ein Gegenprofil aufweist, und wenn die Schraube 60 wie oben ausgeführt mit Spiel angeordnet ist.

Gemäß der vorliegenden Erfindung sind Maßnahmen zur Verhinderung der Durchbiegung der Achse (Traverse) nicht zwingend erforderlich. Vielmehr ist es ausreichend und erfindungsgemäß möglich, mit vergleichsweise einfachen Mitteln die Ausrichtung der Lager so vorzunehmen, dass sie miteinander fluchten. Erfindungsgemäß ist es möglich, die Walzenkörper 30 einzeln auf de Walzenachse 10 auszurichten und so Eigengewicht und äußere Kräfte zu kompensieren.

Wie dies aus der Figur ersichtlich ist, sind die äußeren Lager 20 der Walzenkörper 30 einstellbar. Grundsätzlich kann eine Einstellung ebenfalls oder alternativ auch für die innen liegenden Lager 22 vorgesehen sein.

Die erfindungsgemäße Walze kommt vorzugsweise ohne mittige Unterstützung der Achse 10 und auch ohne Gewichte aus, die in dem überstehenden Bereich der Achse angeordnet sind.

Die vorliegende Erfindung kann eingesetzt werden, um Toleranzen auszugleichen und gegebenenfalls das Lagerspiel einzustellen. Dadurch ergibt sich eine Montageerleichterung sowie auch eine Erleichterung der Wartung der erfindungsgemäßen Walzen bzw. damit versehener Vorrichtungen.

Grundsätzlich kann durch die vorliegende Erfindung der gleiche Durchmesser der Achse 10 auch bei verschiedenen Walzenkörpern 30 verwendet werden.

Die vorliegende Erfindung kann beispielsweise in Druckmaschinen Verwendung finden, jedoch ist die Verwendung nicht darauf beschränkt. Vielmehr ist ein Einsatz überall dort möglich, wo es um die Führung von Materialbahnen geht, insbesondere dann, wenn diese eine verhältnismäßig große Breite aufweisen.

Erfindungsgemäß wird diese Aufgabe durch die Merkmale des kennzeichnenden Teils des Anspruchs 1 gelöst. Demnach

| **Bezugszeichenliste** | |
|---|---|
| 10 | Walzenachse |
| 20 | Lager |
| 22 | Lager |
| 30 | Walzenkörper |
| 40 | Buchse |
| 42 | Ringförmiger Bereich einer Buchse 40 |
| 44 | Flanschförmiger Abschnitt |
| 46 | Innengewindebohrung |
| 50 | Ring |
| 52 | Durchgangsbohrung |
| 60 | Schraube |
| 62 | Schaft |
| | |
| | |
| | |
| | |
| | |
| | |
| | |
| | |
| | |
| | |
| | |

## Patentansprüche

1. Walze mit wenigstens einer Walzenachse (10) und wenigstens einem relativ zu der Walzenachse (10) mittels wenigstens zweier Lager (20,22) drehbaren Walzenkörper (30),
wobei sich wenigstens eines der Lager (20) auf einer Buchse (40) abstützt, die relativ zu der Walzenachse (10) derart bewegbar angeordnet ist, dass die Ausrichtung der Drehachse des sich auf der Buchse (40) abstützenden Lagers (20) relativ zu der Walzenachse (10) veränderbar ist,
**dadurch gekennzeichnet, dass**
die zu der Buchse (40) gewandte Seite des Rings (50) eine konvexe oder konkave Wölbung aufweist und dass die zu dem Ring (50) gewandte Seite der Buchse (40) eine konkave oder konvexe Wölbung aufweist.

2. Walze nach Anspruch 1,
**dadurch gekennzeichnet, dass**
die Buchse (4) einen ersten Bereich aufweist, auf dem sich das Lager (20) abstützt, und einen zweiten Bereich aufweist, mittels dessen die Buchse (40) mittelbar oder unmittelbar mit der Walzenachse (10) verbindbar ist.

3. Walze nach Anspruch 2,
**dadurch gekennzeichnet, dass**
der erste Bereich einen mit Abstand zur Walzenachse (10) angeordneten Ring (42) umfasst, auf dessen Außenumfang sich das Lager (20) abstützt.

4. Walze nach Anspruch 2 oder 3,
**dadurch gekennzeichnet, dass**
der zweite Bereich einen flanschförmigen Abschnitt (44) aufweist.

5. Walze nach einem der Ansprüche 2 bis 4,
**dadurch gekennzeichnet, dass**
der erste Bereich der Buchse (40) und der zweite Bereich' der Buchse (40) im Wesentlichen zueinander senkrecht verlaufen.

6. Walze nach einem der vorhergehenden Ansprüche,
**dadurch gekennzeichnet, dass**
auf der Walzenachse (10) ein Ring (50) angeordnet ist, an dem die Buchse (40) lösbar befestigt ist.

7. Walze nach Anspruch 6,
**dadurch gekennzeichnet, dass**
eine oder beide der einander zugewandten Seiten der Buchse (40) und/oder des Rings (50) eine glatte Oberfläche aufweisen oder eine oder mehrere Rasterungen bildende Stufen aufweisen.

8. Walze nach einem der Ansprüche 6 bis 7,
**dadurch gekennzeichnet, dass**
die Verbindung zwischen Buchse (40) und Ring (50) mittels Kraftschluss oder mittels Formschluss erfolgt.

9. Walze nach einem der Ansprüche 6 bis 8,
**dadurch gekennzeichnet, dass**
die Verbindung zwischen Buchse (40) und Ring (50) mittels einer Schraubverbindung erfolgt, mittels derer Buchsen (40) und Ring (50) aneinander gepresst werden.

10. Walze nach einem der Ansprüche 6 bis 9,
**dadurch gekennzeichnet, dass**
die Befestigung des Rings (50) an der Buchse (40) mittels wenigstens einer Schraubverbindung erfolgt, wobei die Buchse (40) einen Gewindeabschnitt, insbesondere eine Innengewindebohrung (42) aufweist, mit dem ein Abschnitt des Schraubengewindes in Verbindung steht und wobei der Ring (50) eine Ausnehmung oder Bohrung (52) aufweiset, deren Innenabmessungen die Außenabmessungen des Schraubenschaftes (62) übersteigen, so dass die Schraube (60) in der Ausnehmung oder Bohrung (52) in unterschiedliche Positionen bewegbar ist.

11. Walze nach einem der vorhergehenden Ansprüche,
**dadurch gekennzeichnet, dass**
es sich bei den Lagern (20,22) um Kugellager, vorzugsweise um Rillenkugellager handelt.

12. Walze nach einem der vorhergehenden Ansprüche,
**dadurch gekennzeichnet, dass**
auf der Walzenachse (10) zwei oder mehr als zwei Walzenkörper (30) angeordnet sind, von denen die beiden außen liegenden Walzenkörper (30) auf ihrer jeweiligen Außenseite jeweils ein Lager (20) aufweisen, das sich auf jeweils einer der Buchsen (40) abstützt.

13. Walze nach einem der vorhergehenden Ansprüche,
**dadurch gekennzeichnet, dass**
auf der Walzenachse (10) zwei oder mehr als zwei Walzenkörper (30) angeordnet sind, von denen die beiden außen liegenden Walzenkörper (30) auf ihrer jeweiligen Innenseite sowie etwaige dazwischen befindliche Walzenkörper Lager (22) aufweisen, deren Ausrichtung der Drehachse relativ zu der Walzenachse (10) nicht veränderbar ist.

14. Walze nach einem der vorhergehenden Ansprüche,
**dadurch gekennzeichnet, dass**
die Walzenachse (10) drehfest angeordnet ist.

15. Druckmaschine mit wenigstens einer Walze nach einem der Ansprüche 1 bis 14.

16. Verwendung einer Walze nach einem der Ansprüche 1 bis 14 zur Führung von Materialbahnen.

## Claims

1. Roller with at least one roller axle (10) and at least one roller body (30) which is rotatable relative to the roller axle (10) by means of at least two bearings (20, 22),
wherein at least one of the bearings (20) is supported on a bushing (40) which is arranged movably relative to the roller axle (10) in such a manner that the orientation of the axis of rotation of the bearing (20), which is supported on the bushing (40), can be changed relative to the roller axle (10),
**characterized in that** that side of the ring (50) which faces the bushing (40) has a convex or concave curvature, and **in that** that side of the bushing (40) which faces the ring (50) has a concave or convex curvature.

2. Roller according to Claim 1, **characterized in that** the bushing (40) has a first region on which the bearing (20) is supported, and has a second region, by means of which the bushing (40) is indirectly or directly connectable to the roller axle (10).

3. Roller according to Claim 2, **characterized in that** the first region comprises a ring (42) which is arranged at a distance from the roller axle (10) and on the outer circumference of which the bearing (20) is supported.

4. Roller according to Claim 2 or 3, **characterized in that** the second region has a flange-shaped section (44).

5. Roller according to one of Claims 2 to 4, **characterized in that** the first region of the bushing (40) and the second region of the bushing (40) extend substantially perpendicular to each other.

6. Roller according to one of the preceding claims, **characterized in that** a ring (50) to which the bushing (40) is releasably fastened is arranged on the roller axle (10).

7. Roller according to Claim 6, **characterized in that** one or both of the mutually facing sides of the bushing (40) and/or of the ring (50) have a smooth surface or steps forming one or more grid systems.

8. Roller according to either of Claims 6 and 7, **characterized in that** the connection between bushing (40) and ring (50) takes place by means of friction or by means of interlocking.

9. Roller according to one of Claims 6 to 8, **characterized in that** the connection between bushing (40) and ring (50) takes place by means of a screw connection by means of which bushing (40) and ring (50) are pressed against each other.

10. Roller according to one of Claims 6 to 9, **characterized in that** the ring (50) is fastened to the bushing (40) by means of at least one screw connection, wherein the bushing (40) has a threaded section, in particular an internally threaded bore (42), to which a section of the screw thread is connected, and wherein the ring (50) has a recess or bore (52), the internal dimensions of which exceed the external dimensions of the screw stem (62), and therefore the screw (60) is movable into different positions in the recess or bore (52).

11. Roller according to one of the preceding claims, **characterized in that** the bearings (20, 22) are ball bearings, preferably deep groove ball bearings.

12. Roller according to one of the preceding claims, **characterized in that** two or more than two roller bodies (30) are arranged on the roller axle (10), of which roller bodies the two outer roller bodies (30) each have, on the respective outer side thereof, a bearing (20) which is supported on in each case one of the bushings (40).

13. Roller according to one of the preceding claims, **characterized in that** two or more than two roller bodies (30) are arranged on the roller axle (10), of which roller bodies the two outer roller bodies (30), on the respective inner side thereof, and also any roller bodies located in between have bearings (22), the orientation of the axis of rotation of which cannot be changed relative to the roller axle (10).

14. Roller according to one of the preceding claims, **characterized in that** the roller axle (10) is arranged so as to be rotationally fixed.

15. Printing machine with at least one roller according to one of Claims 1 to 14.

16. Use of a roller according to one of Claims 1 to 14 for guiding material webs.

## Revendications

1. Cylindre avec au moins un axe de cylindre (10) et au moins un corps de cylindre (30) pouvant tourner par rapport à l'axe de cylindre (10) au moyen d'au moins deux paliers (20, 22), dans lequel au moins un des paliers (20) s'appuie sur un coussinet (40), qui est mobile par rapport à l'axe de cylindre (10) de telle manière que l'alignement de l'axe de rotation du palier (20) s'appuyant sur le coussinet (40) par rapport à l'axe de cylindre (10) puisse être modifié, **caractérisé en ce que** le côté de la bague (50) tourné vers le coussinet (40) présente une courbure convexe ou concave et **en ce que** le côté du coussinet (40) tourné vers la bague (50) présente une courbure concave ou convexe.

2. Cylindre selon la revendication 1, **caractérisé en ce que** le coussinet (40) présente une première région, sur laquelle le palier (20) s'appuie, et une deuxième région, au moyen de laquelle le coussinet (40) peut être relié indirectement ou directement à l'axe de cylindre (10).

3. Cylindre selon la revendication 2, **caractérisé en ce que** la première région comprend une bague (42) disposée à distance de l'axe de cylindre (10), dont la périphérie extérieure supporte le palier (20).

4. Cylindre selon la revendication 2 ou 3, **caractérisé en ce que** la deuxième région présente une partie (44) en forme de bride.

5. Cylindre selon l'une quelconque des revendications 2 à 4, **caractérisé en ce que** la première région du coussinet (40) et la deuxième région du coussinet (40) sont essentiellement perpendiculaires l'une à l'autre.

6. Cylindre selon l'une quelconque des revendications précédentes, **caractérisé en ce qu'**une bague (50) est disposée sur l'axe de cylindre (10), sur laquelle le coussinet (40) est fixé de façon amovible.

7. Cylindre selon la revendication 6, **caractérisé en ce qu'**un ou les deux des côtés tournés l'un vers l'autre du coussinet (40) et/ou de la bague (50) présentent une surface lisse ou présentent un ou plusieurs épaulements formant des quadrillages.

8. Cylindre selon l'une des revendications 6 à 7, **caractérisé en ce que** la liaison entre le coussinet (40) et la bague (50) est réalisée par friction ou par emboîtement.

9. Cylindre selon l'une quelconque des revendications 6 à 8, **caractérisé en ce que** la liaison entre le coussinet (40) et la bague (50) est réalisée par un assemblage vissé, au moyen duquel le coussinet (40) et la bague (50) sont pressés l'un contre l'autre.

10. Cylindre selon l'une quelconque des revendications 6 à 9, **caractérisé en ce que** la fixation de la bague (50) au coussinet (40) est réalisée au moyen d'au moins un assemblage vissé, dans lequel le coussinet (40) présente une partie filetée, en particulier un alésage à filet intérieur (42), avec laquelle une partie du filet de vis est reliée, et dans lequel la bague (50) présente un évidement ou un alésage (52), dont les dimensions intérieures dépassent les dimensions extérieures de la tige de vis (62), de telle manière que la vis (60) soit déplaçable dans différentes positions dans l'évidement ou l'alésage (52).

11. Cylindre selon l'une quelconque des revendications précédentes, **caractérisé en ce que** les paliers (20, 22) sont des roulements à billes, en particulier des roulements à billes rainurés.

12. Cylindre selon l'une quelconque des revendications précédentes, **caractérisé en ce que** deux ou plus de deux corps de cylindre (30) sont disposés sur l'axe de cylindre (10), parmi lesquels les deux corps de cylindre (30) situés à l'extérieur présentent sur leur côté extérieur respectif respectivement un palier (20), qui s'appuie respectivement sur un des coussinets (40).

13. Cylindre selon l'une quelconque des revendications précédentes, **caractérisé en ce que** deux ou plus de deux corps de cylindre (30) sont disposés sur l'axe de cylindre (10), parmi lesquels les deux corps de cylindre (30) situés à l'extérieur présentent sur le côté intérieur respectif ainsi que d'éventuels corps de cylindre se trouvant entre ceux-ci présentent des paliers (22), dont l'alignement de l'axe de rotation par rapport à l'axe de cylindre (10) ne peut pas être modifié.

14. Cylindre selon l'une quelconque des revendications précédentes, **caractérisé en ce que** l'axe de cylindre (10) est disposé de façon immobile en rotation.

15. Machine d'impression avec au moins un cylindre selon l'une quelconque des revendications 1 à 14.

16. Utilisation d'un cylindre selon l'une quelconque des revendications 1 à 14 pour le guidage de bandes de matière.
